# EUROPÄISCHE PATENTSCHRIFT

(11) **EP 4 595 171 B1**
(45) Veröffentlichungstag und Bekanntmachung des Hinweises auf die Patenterteilung: **25.02.2026**
(21) Anmeldenummer: 22844096.2
(22) Anmeldetag: 22.12.2022
(51) Int. Cl.: H01R 43/02, H01R 4/02

(54) **VERFAHREN ZUM VERSCHWEISSEN VON LEITUNGEN ZU EINER Y- ODER X-VERBINDUNG MITTELS ULTRASCHALL**
METHOD FOR WELDING LINES TO FORM A Y OR X CONNECTION USING ULTRASOUND
PROCÉDÉ DE SOUDAGE DE LIGNES POUR FORMER UNE CONNEXION Y OU X À L'AIDE D'ULTRASONS

(43) Veröffentlichungstag der Anmeldung: 06.08.2025
(73) Patentinhaber: Schunk Sonosystems GmbH, 35435 Wettenberg (DE)
(72) Erfinder: RÜHL, Sebastian, 35083 Wetter (DE); WAGENBACH, Udo, 38418 Buseck (DE); KEILHOLZ, Günter, 97359 Schwarzach (DE)
(74) Vertreter: Qip Patent & Recht Dr. Kuehn & Partner mbB
(86) Internationale Anmeldenummer: PCT/EP2022/087591
(87) Internationale Veröffentlichungsnummer: WO 2024/132168

(56) Entgegenhaltungen:
- JP-A- 2007 134 307
- JP-A- 2013 118 196
- JP-A- H11 114 673
- US-A1- 2020 171 597

## Beschreibung

### Gebiet der Erfindung

Die vorliegende Erfindung betrifft ein Verfahren zum Verschweißen von mindestens drei Leitungen zu einer Y- oder X-Verbindung mittels Ultraschall.

### Hintergrund der Erfindung

Elektrische Leitungen mit je zwei oder mehr Litzen, beispielsweise Hochvoltkabel, wie sie im Automobilbau eingesetzt werden, können durch Ultraschallschweißen zu sogenannten X- oder Y-Verbindungen (englisch *X-splice* bzw. *Y-splice*) zusammengeschweißt werden (X-Verbindungen werden auch als H-Verbindungen, englisch *H-splice,* bezeichnet). Bei mehrpoligen Kabeln können beispielsweise die Litzen, die jeweils dem gleichen Pol zugeordnet sind, miteinander verschweißt werden.

Eine Y-Verbindung kann beispielsweise drei elektrische Leitungen mit je zwei Litzen über zwei Schweißknoten miteinander verbinden. Bei zweipoligen Leitungen kann beispielsweise jeder Schweißknoten diejenigen drei Litzen miteinander verbinden, die dem gleichen Pol, beispielsweise Plus oder Minus, zugeordnet sind.

Eine X-Verbindung kann beispielsweise vier elektrische Leitungen mit je zwei Litzen über zwei Schweißknoten miteinander verbinden. Bei zweipoligen Leitungen kann beispielsweise jeder Schweißknoten diejenigen vier Litzen miteinander verbinden, die dem gleichen Pol, beispielsweise Plus oder Minus, zugeordnet sind.

Die Anzahl der Schweißknoten kann dabei der Anzahl der Litzen in den elektrischen Leitungen entsprechen (z. B. zwei Schweißknoten bei zwei Litzen je Leitung).

Um kurze Taktzeiten zu erreichen, ist es üblich, dass die Litzen, die miteinander verbunden werden sollen, in einem einzigen Schritt mittels Ultraschall zusammengeschweißt werden. Dabei kann das Einlegen und Fixieren der Litzen je nach deren Anzahl und Größe recht aufwendig sein und ein gewisses Maß an Übung erfordern. Werden die Litzen ungenau positioniert, so können beispielsweise Schweißfehler entstehen, die die Qualität der resultierenden Schweißverbindung (nachstehend auch Knoten genannt) deutlich mindern können.

JP 2007 134307 A, US 2020/171597 A1, JP 2013 118196 A und JP H11 114673 A beschreiben jeweils Verfahren zum Verbinden von Kabeln mithilfe von Schweißverfahren, insbesondere teilweise mittels Ultraschallschweißens..

### Zusammenfassung der Erfindung und vorteilhafter Ausführungsformen

Es kann daher Bedarf an einem Verfahren bestehen, das eine verbesserte Herstellung von Y- und/oder X-Verbindungen, beispielsweise eine Verbesserung der Schweißqualität und/oder Zuverlässigkeit beim Ultraschallschweißen von Y- und/oder X-Verbindungen, gegenüber herkömmlichen Verfahren ermöglicht.

Diesem Bedarf kann mit dem Gegenstand des unabhängigen Anspruchs entsprochen werden. Vorteilhafte Ausführungsformen sind in den abhängigen Ansprüchen, der nachfolgenden Beschreibung und den beigefügten Figuren dargelegt.

Die Erfindung betrifft ein Verfahren zum Verschweißen von mindestens drei Leitungen zu einer Y- oder X-Verbindung, wie es in Anspruch 1 definiert ist, wobei jede Leitung mindestens zwei Litzen mit je einem freiliegenden Litzenabschnitt umfasst. Das Verfahren umfasst zumindest die folgenden Ultraschallschweißschritte: einen ersten Ultraschallschweißschritt, in dem mindestens zwei Ausgangsknoten gebildet werden, wobei jeder Ausgangsknoten durch Verschweißen von mindestens zwei der Litzenabschnitte mittels Ultraschall gebildet wird; einen dem ersten Ultraschallschweißschritt folgenden zweiten Ultraschallschweißschritt, in dem mindestens zwei Gesamtknoten gebildet werden, wobei mindestens einer der Gesamtknoten durch Verschweißen von mindestens einem der zuvor gebildeten Ausgangsknoten mit mindestens einem der übrigen Litzenabschnitte, die noch nicht in einem Ausgangsknoten verschweißt wurden, und/oder mit mindestens einem anderen der zuvor gebildeten Ausgangsknoten mittels Ultraschall gebildet wird.

Wie eingangs erwähnt, kann die Handhabung der Litzen beim Schweißen von Y- oder X-Verbindungen aus mehr als zwei Litzen sehr aufwendig sein, wenn die Verbindungen jeweils in einem einzigen Schritt geschweißt werden.

Beispielsweise können bei einer herkömmlichen Herstellung einer Y-Verbindung aus drei Leitungen mit je zwei Litzen zwei Knoten aus je drei Litzen geschweißt werden. Zum Schweißen eines ersten Knotens kann eine Litze von einer Seite und können zwei weitere Litzen von einer anderen Seite in den Schweißraum eingelegt werden. Anschließend werden die drei Litzen in einem Schritt miteinander verschweißt. Dabei müssen die übrigen Litzen so positioniert werden, dass sie beim Schweißen des ersten Knotens nicht im Weg sind. Ein zweiter Knoten kann dann analog zum ersten Knoten aus den übrigen drei Litzen geschweißt werden, wobei die über den ersten Knoten miteinander verbundenen Litzen so positioniert werden müssen, dass sie beim Schweißen des zweiten Knotens nicht im Weg sind.

Bei einer herkömmlichen Herstellung einer X-Verbindung aus vier Leitungen mit je zwei Litzen können hingegen in jedem Schweißschritt vier Litzen zu einem Knoten verschweißt werden, beispielsweise vier Minuspol-Litzen in einem ersten Schweißschritt zu einem ersten Knoten und vier Pluspol-Litzen in einem zweiten Schweißschritt zu einem zweiten Knoten.

Im Gegensatz dazu werden die Litzen im hier vorgestellten Verfahren mehrstufig zu Knoten verschweißt. Dies vereinfacht die Handhabung der Litzen, insbesondere deren Anordnung und/oder Fixierung innerhalb und/oder außerhalb des Schweißraums. Somit können Fehler beim Schweißen vermieden werden. Dies wiederum verringert den Ausschuss und verbessert die Prozesssicherheit sowie die Produktqualität.

Insbesondere kann mindestens einer der folgenden Fehler mithilfe des hier vorgestellten Verfahrens vermieden werden:
a) Wenn mindestens eine der Litzen zu weit in den Schweißraum hineinragt: Bürstenbildung, abstehende Einzeladern, Beschädigung der Ummantelung einer oder mehrerer Litzen und/oder Leitungen.
b) Wenn mindestens eine der Litzen nicht weit genug in den Schweißraum hineinragt: Überschweißen, beschädigte Einzeladern in der Nähe der Schweißstelle, Beschädigung der Ummantelung einer oder mehrerer Litzen und/oder Leitungen.
c) Verringerte Knotenfestigkeit aufgrund eines symmetrischen Knotenaufbaus (dies kann beispielsweise unter zusätzlicher Verwendung einer entsprechenden Einlegehilfe, auch *antiside splice kit* genannt, vermieden werden).
d) Bei drei oder mehr in einem Schritt miteinander zu verschweißenden Litzen kann es vorkommen, dass ein Teil der Litzen nicht korrekt (oder gar nicht) zwischen Sonotrode und Amboss zusammengedrückt wird. Die Leitungen sind dann unter Umständen nicht mehr zu verschweißen oder müssen unter Umständen neu vorbereitet werden, beispielsweise neu abisoliert und/oder auf die richtige Länge gekürzt werden. Üblicherweise ist dies aufgrund von Vorgaben nicht mehr möglich, sodass die Leitungen entsorgt werden müssen. Auch kann es sein, dass einzelne, nicht komprimierte Einzeladern aufgrund ihrer geringen Größe von der Prozessüberwachung nicht erkannt werden.

Allgemein können die oben genannten Fehler zur Folge haben, dass die Leitungen entweder entsorgt oder, wenn möglich, aufwendig für einen erneuten Schweißversuch vorbereitet werden müssen.

Nachstehend werden einige Begriffe genauer definiert.

Unter "Litze" kann vor- und nachstehend ein aus mehreren Einzeldrähten (z. B. aus Kupfer, Kupferlegierung, Aluminium oder Aluminiumlegierung) gebildeter elektrischer Leiter verstanden werden. Die Litze kann an ihrer Außenseite zumindest abschnittweise mit einem elektrischen isolierenden Material in einer oder mehreren Schichten ummantelt sein.

Unter "Leitung" kann vor- und nachstehend ein aus mehreren Litzen gebildeter elektrischer Leiter verstanden werden. Die Leitung kann an ihrer Außenseite zumindest abschnittweise mit einem elektrischen isolierenden Material in einer oder mehreren Schichten ummantelt sein. Zusätzlich oder alternativ kann die Leitung eine Hülle aus einem elektrisch leitfähigen Material zur Abschirmung elektromagnetischer Felder umfassen. Die Litzen der Leitung können dabei zumindest abschnittsweise innerhalb der Hülle verlaufen.

Unter "Litzenabschnitt" kann insbesondere ein Endabschnitt einer Litze verstanden werden. Beispielsweise kann der Litzenabschnitt ein abisolierter (End-)Abschnitt der Litze sein.

Unter "Knoten" wie in "Ausgangsknoten" oder "Gesamtknoten" kann eine durch Ultraschallschweißen mindestens zweier Fügepartner hergestellte Schweißverbindung verstanden werden. Ein solcher Knoten kann entweder ein sogenannter Durchgangsknoten oder ein sogenannter Endknoten sein. Zum Bilden eines Durchgangsknotens werden die jeweiligen Fügepartner von unterschiedlichen, insbesondere einander entgegengesetzten Richtungen in den Schweißraum eingelegt. Zum Bilden eines Endknotens werden die jeweiligen Fügepartner hingegen von der gleichen Richtung in den Schweißraum eingelegt.

Die Ausgangsknoten können sich von den Gesamtknoten dadurch unterscheiden, dass sie weniger Litzen als die Gesamtknoten elektrisch leitfähig miteinander verbinden.

Insbesondere kann ein Gesamtknoten wenigstens eine Litze mehr aufweisen als der Ausgangsknoten, der zum Bilden dieses Gesamtknotens vorangehend als Zwischenprodukt gebildet wurde. Beispielsweise kann ein als X-Verbindung ausgestalteter Gesamtknoten doppelt so viele Litzen miteinander verbinden wie der vorangehende Ausgangsknoten bzw. jeder der vorangehenden Ausgangsknoten. Vorzugsweise kann jeder Gesamtknoten doppelt so viele Litzen miteinander verbinden als jeder Ausgangsknoten. Beispielsweise kann jeder Gesamtknoten mindestens vier der Litzen miteinander verbinden, während jeder Ausgangsknoten mindestens zwei der Litzen miteinander verbindet.

Ein Schweißteil, das unmittelbar durch das vor- und nachstehend beschriebene Verfahren hergestellt wurde, kann umfassen: mindestens drei Leitungen, wobei jede Leitung mindestens zwei Litzen umfasst; mindestens zwei Gesamtknoten, wobei jeder Gesamtknoten durch ein mindestens zweistufiges Verschweißen von mindestens drei der Litzen mittels Ultraschall gebildet wurde, wobei der Gesamtknoten im Querschnitt betrachtet mindestens eine charakteristische Linie aufweist, die sich entlang abgeflachter Bereiche von Querschnitten einzelner Adern der Litzen erstreckt.

Eine solche charakteristische Linie kann beispielsweise in einem Schliffbild unter dem Mikroskop erkennbar sein.

Es ist möglich, dass sich die charakteristische Linie jeweils über einen Großteil einer Gesamtbreite oder -höhe des Querschnitts des Gesamtknotens erstreckt, beispielsweise über mehr als 50 %, mehr als 70 % oder mehr als 90 % der Gesamtbreite bzw. -höhe.

Die charakteristische Linie kann insbesondere eine gerade Linie sein. Der Begriff "gerade" kann hier so verstanden werden, dass die charakteristische Linie zwischen zwei gedachten parallelen Linien mit einem Abstand von 2 mm oder weniger, 1 mm oder weniger oder 0,5 mm oder weniger verläuft.

Ausführungsformen der Erfindung können, ohne die Erfindung einzuschränken, als auf den nachstehend beschriebenen Ideen und Erkenntnissen beruhend angesehen werden.

Gemäß einer Ausführungsform kann zum Verschweißen von mindestens drei Leitungen zu einer Y-Verbindung im zweiten Ultraschallschweißschritt jeder Gesamtknoten durch Verschweißen von mindestens einem der Ausgangsknoten mit mindestens einem der übrigen Litzenabschnitte mittels Ultraschall gebildet werden.

Gemäß einer Ausführungsform kann zum Verschweißen von mindestens vier Leitungen zu einer X-Verbindung im zweiten Ultraschallschweißschritt jeder Gesamtknoten durch Verschweißen von mindestens zwei der Ausgangsknoten mittels Ultraschall gebildet werden.

Gemäß einer Ausführungsform können zum Verschweißen von mindestens vier Leitungen zu einer X-Verbindung im zweiten Ultraschallschweißschritt ein erster Gesamtknoten und ein zweiter Gesamtknoten gebildet werden. Der erste Gesamtknoten kann durch Verschweißen der mindestens zwei Ausgangsknoten mittels Ultraschall gebildet werden. Der zweite Gesamtknoten kann durch Verschweißen der übrigen Litzenabschnitte mittels Ultraschall gebildet werden. Anders ausgedrückt ist es möglich, dass mindestens einer der Gesamtknoten zwei- oder mehrstufig geschweißt wird und mindestens ein anderer der Gesamtknoten einstufig geschweißt wird.

Gemäß einer Ausführungsform kann das Verschweißen mittels Ultraschall umfassen: Positionieren der jeweiligen Fügepartner in einem Zwischenraum zwischen einer Sonotrode und einem Amboss; Zusammendrücken der im Zwischenraum positionierten Fügepartner; Versetzen der Sonotrode in Ultraschallschwingungen.

Bei den jeweiligen Fügepartnern kann es sich beispielsweise um mindestens zwei oder mindestens vier der Litzenabschnitte, mindestens zwei der Ausgangsknoten oder eine Kombination aus mindestens einem der Ausgangsknoten und mindestens einem der Litzenabschnitte handeln.

Die im Zwischenraum positionierten Fügepartner können beispielsweise dadurch zusammengedrückt werden, dass die Sonotrode und der Amboss relativ zueinander entlang einer ersten Achse aufeinander zubewegt werden.

Zusätzlich können die im Zwischenraum positionierten Fügepartner zwischen zwei in Richtung einer zur ersten Achse orthogonalen zweiten Achse einander gegenüberliegenden Wandelementen, beispielsweise einem Seitenschieber und einer Tuschierplatte oder zwei Seitenschiebern, zusammengedrückt werden. Dazu können die Wandelemente relativ zueinander entlang der zweiten Achse aufeinander zubewegt werden.

Durch Verändern des Abstands zwischen den Wandelementen kann beispielsweise eine gewünschte Breite des jeweiligen Ausgangs- bzw. Gesamtknotens, nachstehend auch Schweißbreite genannt, eingestellt werden.

Der Zwischenraum kann auch als Schweiß- oder Verdichtungsraum bezeichnet werden.

Unter "Ultraschallschwingungen" können Schwingungen mit Frequenzen im Ultraschallbereich von 16 kHz bis 1 GHz, vorzugsweise von 16 kHz bis 100 kHz, verstanden werden.

Je nach Ausführung können die jeweiligen Fügepartner entweder von unterschiedlichen, insbesondere einander entgegengesetzten Richtungen oder von der gleichen Richtung in den Zwischenraum eingelegt werden.

Gemäß einer Ausführungsform können die mindestens zwei Litzenabschnitte beim Bilden von mindestens einem der oder jedem Ausgangsknoten so positioniert werden, dass sie von der gleichen Seite in den Zwischenraum hineinragen. Dies hat den Effekt, dass mindestens einer der oder jeder Ausgangsknoten als ein Endknoten (siehe weiter oben) ausgebildet wird.

Gemäß einer Ausführungsform können die mindestens zwei Litzenabschnitte beim Bilden von mindestens einem der oder jedem Ausgangsknoten so positioniert werden, dass sie von unterschiedlichen, insbesondere einander gegenüberliegenden Seiten in den Zwischenraum hineinragen. Dies hat den Effekt, dass mindestens einer der oder jeder Ausgangsknoten als ein Durchgangsknoten (siehe weiter oben) ausgebildet wird.

Denkbar ist auch, dass mindestens einer der Ausgangsknoten als Endknoten ausgebildet wird, während mindestens ein anderer der Ausgangsknoten als Durchgangsknoten ausgebildet wird.

Gemäß einer Ausführungsform können mindestens zwei der jeweiligen Fügepartner beim Bilden von mindestens einem der oder jedem Gesamtknoten so positioniert werden, dass sie von der gleichen Seite in den Zwischenraum hineinragen. Dies hat den Effekt, dass mindestens einer der oder jeder Gesamtknoten als ein Endknoten (siehe weiter oben) ausgebildet wird.

Gemäß einer Ausführungsform können mindestens zwei der jeweiligen Fügepartner beim Bilden von mindestens einem der oder jedem Gesamtknoten so positioniert werden, dass sie von unterschiedlichen, insbesondere einander gegenüberliegenden Seiten in den Zwischenraum hineinragen. Dies hat den Effekt, dass mindestens einer der oder jeder Gesamtknoten als ein Durchgangsknoten (siehe weiter oben) ausgebildet wird.

Beispielsweise können beim Bilden des zweiten Gesamtknotens mindestens zwei der übrigen Litzenabschnitte (die von mindestens zwei der Leitungen stammen können) von einer ersten Seite und mindestens zwei weitere der übrigen Litzenabschnitte (die von mindestens zwei weiteren der Leitungen stammen können) von einer zweiten Seite, die der ersten Seite gegenüberliegen kann, in den Zwischenraum hineinragen.

Gemäß einer Ausführungsform können nicht zu verschweißende Abschnitte der Leitungen mittels einer Rückhaltevorrichtung außerhalb des Zwischenraums gehalten werden. Dazu kann die Rückhaltevorrichtung angrenzend an den Zwischenraum oder zumindest in der Nähe des Zwischenraums angeordnet sein, beispielsweise indem die Rückhaltevorrichtung als Teil eines Seitenschiebers oder eines Ambosses ausgeführt ist. Es ist möglich, dass die Rückhaltevorrichtung beim Verschweißen innerhalb eines Schallschutzgehäuses angeordnet ist. Je nach Ausführung kann die Rückhaltevorrichtung mindestens eines der folgenden Elemente zum Fixieren der nicht zu verschweißenden Abschnitte umfassen: eine Aussparung, einen Vorsprung, einen Bügel, einen Haken, eine Klemmeinrichtung, ein Greifelement, eine Feder, einen Niederhalter. Somit kann verhindert werden, dass nicht zu verschweißende Abschnitte ungewollt in den Zwischenraum gelangen.

Gemäß einer Ausführungsform können die nicht zu verschweißenden Abschnitte mindestens einen der folgenden Abschnitte der Leitungen umfassen: einen der Ausgangsknoten, einen der Gesamtknoten, einen der Litzenabschnitte. Anders ausgedrückt kann die Rückhaltevorrichtung speziell ausgeformt sein, um einen oder mehrere dieser Abschnitte vom Zwischenraum fernzuhalten.

Gemäß einer Ausführungsform können beim Bilden der Ausgangsknoten andere Ultraschallschweißparameter als beim Bilden der Gesamtknoten verwendet werden. Die Ultraschallschweißparameter können beispielsweise mindestens einen der folgenden Parameter umfassen: eine Ultraschallamplitude; eine Schweißleistung; eine Schweißenergie; eine Schweißzeit; ein Druck, mit dem die jeweiligen Fügepartner zusammengedrückt werden; eine Anpressfläche; eine Schweißbreite (siehe weiter oben); eine Höhendifferenz zwischen einer vor dem Verschweißen gemessenen Höhe der jeweiligen Fügepartner im zusammengedrückten Zustand und einer nach dem Verschweißen gemessenen Höhe der jeweiligen Fügepartner im verschweißten Zustand.

Beispielsweise können die im ersten Ultraschallschweißschritt verwendeten Ultraschallschweißparameter von den im zweiten Ultraschallschweißschritt verwendeten Ultraschallschweißparametern um mehr als 5 %, mehr als 10 %, mehr als 20 %, mehr als 40 %, mehr als 60 % oder mehr als 80 % abweichen.

Die Anpressfläche kann durch eine Schweißbreite und eine Schweißlänge definiert sein.

Das Verschweißen kann jeweils durch sogenanntes Energieschweißen unter Einbringung einer vorgegebenen Schweißenergie, durch sogenanntes Höhenschweißen, auch Schweißen auf absolute Höhe oder Absolut-h-Schweißen genannt, und/oder durch sogenanntes Delta-h-Schweißen erfolgen.

Beim Höhenschweißen wird die Schweißung so lange durchgeführt, bis eine vorgegebene Höhe des Schweißguts, hier des Ausgangs- bzw. Gesamtknotens, erreicht ist. Im Unterschied zum Energieschweißen endet die Schweißung nicht nach Einbringung einer vorgegebenen Energie, sondern nach Erreichen der vorgegebenen Höhe.

Beim Delta-h-Schweißen wird die Schweißung so lange durchgeführt, bis eine vorgegebene Differenz zwischen dem sogenannten Kompaktiermaß und dem sogenannten Schweißmaß erreicht ist. Das Kompaktiermaß ist das Maß des Schweißguts vor dem Schweißen und wird gemessen, indem die Werkzeuge auf das Schweißgut gefahren werden, um es zu kompaktieren, und die Höhe des kompaktierten Schweißguts gemessen wird. Das Schweißmaß ist das Maß des Schweißguts nach dem Schweißen und wird nach dem Schweißen gemessen. Das Schweißmaß ist in der Regel kleiner als das Kompaktiermaß, da sich die Höhe des Schweißguts während des Schweißens verringert.

Die Schweißenergie ist beim Höhen- und Delta-h-Schweißen also kein Vorgabewert (wie beim Energieschweißen), sondern eine Resultierende.

Dies ermöglicht eine gezielte Anpassung der einzelnen Schweißschritte an die Eigenschaften der jeweiligen Fügepartner und damit eine bessere Kontrolle des gesamten Schweißprozesses im Vergleich zu Ausführungen, bei denen für alle Schweißschritte die gleichen Ultraschallschweißparameter verwendet werden.

Gemäß einer vorteilhaften Ausgestaltung kann beim Bilden des Ausgangsknotens eine Schweißbreite anders, insbesondere größer oder kleiner, eingestellt werden als beim nachfolgenden Bilden des Gesamtknotens. Hierdurch können ähnliche vorteilhafte Effekte erzielt werden, wie sie in der früher von der Anmelderin eingereichten Patentanmeldung WO 2022/022833 A1 beschrieben wurden. Der Inhalt der früheren Anmeldung soll hierin durch Inbezugnahme vollumfänglich aufgenommen sein.

Gemäß einer Ausführungsform kann mindestens einer der folgenden Ultraschallschweißparameter beim Bilden der Ausgangsknoten kleiner, beispielsweise um mehr als 5 %, mehr als 10 %, mehr als 20 %, mehr als 40 %, mehr als 60 % oder mehr als 80 % kleiner, als beim Bilden der Gesamtknoten gewählt werden: eine Ultraschallamplitude; eine Schweißleistung; eine Schweißenergie; eine Schweißzeit; eine Anpressfläche; eine Schweißbreite; ein Druck, mit dem die jeweiligen Fügepartner zusammengedrückt werden. Damit kann beispielsweise bewirkt werden, dass die Litzenabschnitte beim Bilden der Ausgangsknoten lediglich vorverdichtet werden, d. h. die Ausgangsknoten beispielsweise eine geringere Festigkeit und/oder Dichte als die Gesamtknoten haben. Dies kann sich günstig auf die Schweißqualität auswirken.

Gemäß einer Ausführungsform können die Ausgangsknoten auf einer anderen Ultraschallschweißmaschine als die Gesamtknoten gebildet werden. Beispielsweise können die Ausgangsknoten mit einer Serienmaschine gebildet werden, während die Gesamtknoten mit einer speziell angepassten Sondermaschine gebildet werden können. Die Sondermaschine kann beispielsweise mit mindestens einer der folgenden Komponenten ausgestattet sein: der Rückhaltevorrichtung, einer speziellen Einlegehilfe zur Vermeidung symmetrischer Knotenaufbauten, einer Klemmvorrichtung zum Klemmen der Leitungen, einem Isolationsanschlag. Alternativ können alle Schweißschritte auf der gleichen Ultraschallschweißmaschine ausgeführt werden, sofern diese entsprechend ausgestattet ist.

Gemäß einer Ausführungsform kann mindestens einer der oder jeder Ausgangsknoten aus Litzenabschnitten von mindestens zwei der Leitungen gebildet werden. Anders ausgedrückt kann mindestens einer der bzw. jeder Ausgangsknoten Litzen unterschiedlicher Leitungen elektrisch leitfähig miteinander verbinden, beispielsweise Litzen, die dem gleichen Pol wie Plus oder Minus zugeordnet sind.

Gemäß einer Ausführungsform kann mindestens einer der oder jeder Ausgangsknoten aus Litzenabschnitten der gleichen Leitung gebildet werden. Anders ausgedrückt kann mindestens einer der bzw. jeder Ausgangsknoten Litzen der gleichen Leitung elektrisch leitfähig miteinander verbinden.

Gemäß einer Ausführungsform kann jeder Ausgangsknoten aus anderen Litzenabschnitten als jeder übrige Ausgangsknoten gebildet werden. Anders ausgedrückt können verschiedene Ausgangsknoten verschiedene Litzen miteinander kombinieren.

Gemäß einer Ausführungsform kann jeder Gesamtknoten aus anderen Fügepartnern als jeder übrige Gesamtknoten gebildet werden. Anders ausgedrückt können verschiedene Gesamtknoten verschiedene Litzen miteinander kombinieren.

Gemäß einer Ausführungsform kann mindestens einer der Litzenabschnitte in einem dem ersten und/oder zweiten Ultraschallschweißschritt vorhergehenden Ultraschallverdichtungsschritt mittels Ultraschall verdichtet worden sein. Hierzu kann der Litzenabschnitt im Zwischenraum positioniert und zusammengedrückt werden, wobei die Sonotrode in Ultraschallschwingungen versetzt wird.

### Kurze Beschreibung der Figuren

Nachfolgend werden Ausführungsformen der Erfindung unter Bezugnahme auf die beigefügten Zeichnungen beschrieben. Weder die Beschreibung noch die Zeichnungen sind als die Erfindung einschränkend auszulegen.
Fig. 1 zeigt eine Ultraschallschweißmaschine zur Verwendung in einem Verfahren gemäß einer Ausführungsform der Erfindung.
Fig. 2a und Fig. 2b veranschaulichen Schritte bei der Herstellung einer X-Verbindung aus vier Leitungen in einem Verfahren gemäß einer Ausführungsform der Erfindung.
Fig. 3a und Fig. 3b veranschaulichen Schritte bei der Herstellung einer X-Verbindung aus vier Leitungen in einem alternativen Verfahren gemäß einer Ausführungsform der Erfindung.
Fig. 4 veranschaulicht Schritte bei der Herstellung einer Y-Verbindung aus drei Leitungen in einem Verfahren gemäß einer Ausführungsform der Erfindung.
Fig. 5 zeigt einen Querschnitt durch einen Gesamtknoten, der in einem Verfahren gemäß einer Ausführungsform der Erfindung geschweißt wurde.

Die Zeichnungen sind lediglich schematisch und nicht maßstabsgetreu. Gleiche Bezugszeichen in verschiedenen Zeichnungen bezeichnen gleiche oder gleichwirkende Merkmale.

### Beschreibung vorteilhafter Ausführungsformen

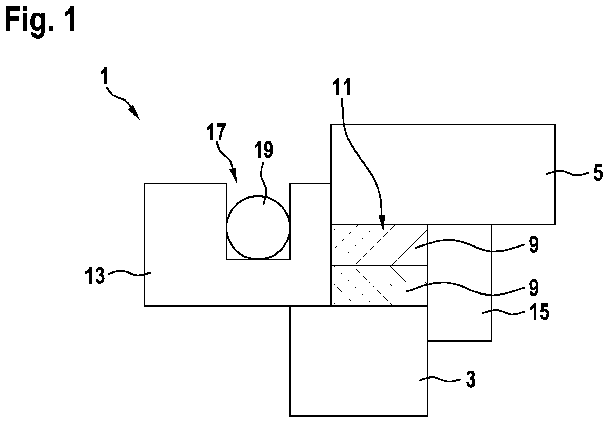

Fig. 1 zeigt einen grundsätzlichen Aufbau einer Ultraschallschweißmaschine 1, die geeignet ist, um eines oder mehrere der nachstehend beschriebenen Schweißverfahren auszuführen. Die Ultraschallschweißmaschine 1 umfasst eine Sonotrode 3 zum Erzeugen von Ultraschallschwingungen und einen Amboss 5. Die Sonotrode 3 und der Amboss 5 können relativ zueinander verlagerbar sein. Im Schweißbetrieb können die Sonotrode 3 und der Amboss 5 einander gegenüberliegen, wobei miteinander zu verschweißende Fügepartner 9 in einem Zwischenraum 11 zwischen der Sonotrode 3 und dem Amboss 5 positioniert sind und mittels der Sonotrode 3 und dem Amboss 5 mit einem bestimmten Druck zusammengedrückt werden. Dabei wird die Sonotrode 3 in Ultraschallschwingungen versetzt. Dies bewirkt, dass die Fügepartner 9 miteinander verschweißt werden. Zusätzlich kann der Zwischenraum 11 an zwei weiteren Seiten von zwei Wandelementen, hier einem (horizontal verschiebbaren) Seitenschieber 13 und einer Tuschierplatte 15, begrenzt sein.

Darüber hinaus kann die Ultraschallschweißmaschine 1 mit einer Rückhaltevorrichtung 17 ausgestattet sein, die ausgebildet ist, um einen oder mehrere nicht zu verschweißende Abschnitte 19 der Fügepartner 9, beispielsweise Abschnitte von Kabeln, vom Zwischenraum 11 fernzuhalten. In diesem Beispiel ist die Rückhaltevorrichtung 17 durch eine Nut im Seitenschieber 13 gebildet, in die der nicht zu verschweißende Abschnitt 19 bzw. die nicht zu verschweißenden Abschnitte 19 eingelegt, beispielsweise eingehakt, werden können.

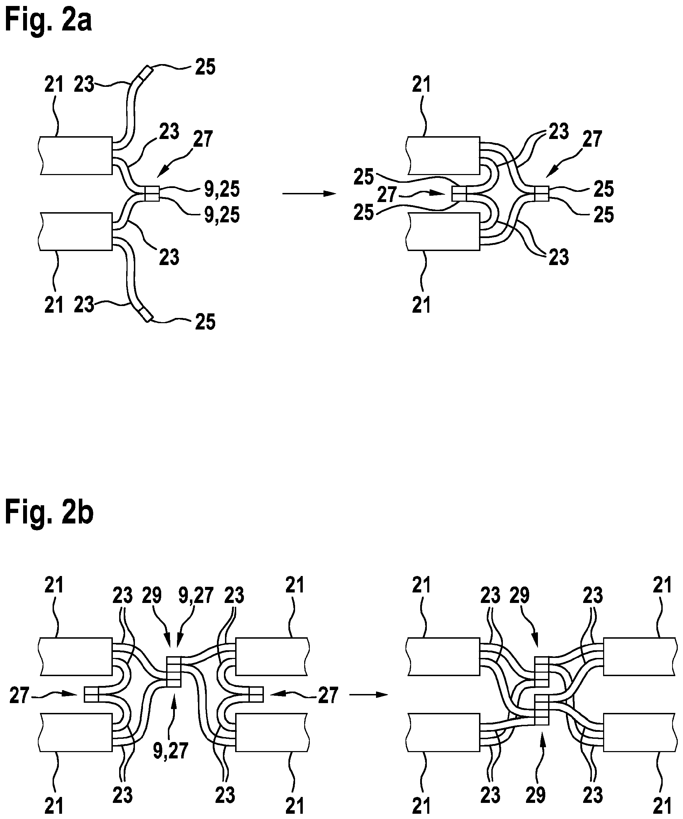

Wie in Fig. 2a und Fig. 2b gezeigt, kann die Ultraschallschweißmaschine 1 beispielsweise eingesetzt werden, um vier elektrische Leitungen 21, die je zwei Litzen 23 umfassen, beispielsweise Hochvoltkabel, wie sie in Fahrzeugen mit elektrischem Antrieb verwendet werden, miteinander zu einer sogenannten X- oder H-Verbindung zu verschweißen. Fig. 2a und Fig. 2b zeigen beispielhaft einzelne Schritte eines entsprechenden Schweißverfahrens.

Jede Litze 23 weist einen freiliegenden Litzenabschnitt 25 auf, an dem die Litze 23 verschweißt werden soll. Der Litzenabschnitt 25 ist hier beispielhaft durch ein abisoliertes Ende der Litze 23 gebildet.

Zunächst werden jeweils zwei der Litzenabschnitte 25 als Fügepartner 9 in einem Vorverdichtungsschritt zu einem Ausgangsknoten 27 verschweißt (siehe Fig. 2a). Bei acht Litzen 23 werden also in vier Vorverdichtungsschritten insgesamt vier Ausgangsknoten 27 geschweißt.

Die zwei Litzenabschnitte 25 werden hier im Vorverdichtungsschritt jeweils so positioniert, dass sie von der gleichen Seite in den Zwischenraum 11 hineinragen und der resultierende Ausgangsknoten 27 ein sogenannter Endknoten ist.

Wie in Fig. 2a zu sehen, kann jeder Ausgangsknoten 27 die Litzen 23 zweier verschiedener Leitungen 21 elektrisch leitfähig miteinander verbinden.

Anschließend werden jeweils zwei der Ausgangsknoten 27 als Fügepartner 9 in einem Fertigschweißschritt zu einem Gesamtknoten 29 verschweißt (siehe Fig. 2b). Bei vier Ausgangsknoten 27 werden also in zwei Fertigschweißschritten insgesamt zwei Gesamtknoten 29 geschweißt.

Wie in Fig. 2b zu sehen, kann jeder Gesamtknoten 29 die Litzen 23 vier verschiedener Leitungen 21 elektrisch leitfähig miteinander verbinden.

Beispielsweise kann bei einer zweipoligen Verbindung einer der Gesamtknoten 29 alle Minuspol-Litzen miteinander verbinden, während der andere Gesamtknoten 29 alle Pluspol-Litzen miteinander verbindet.

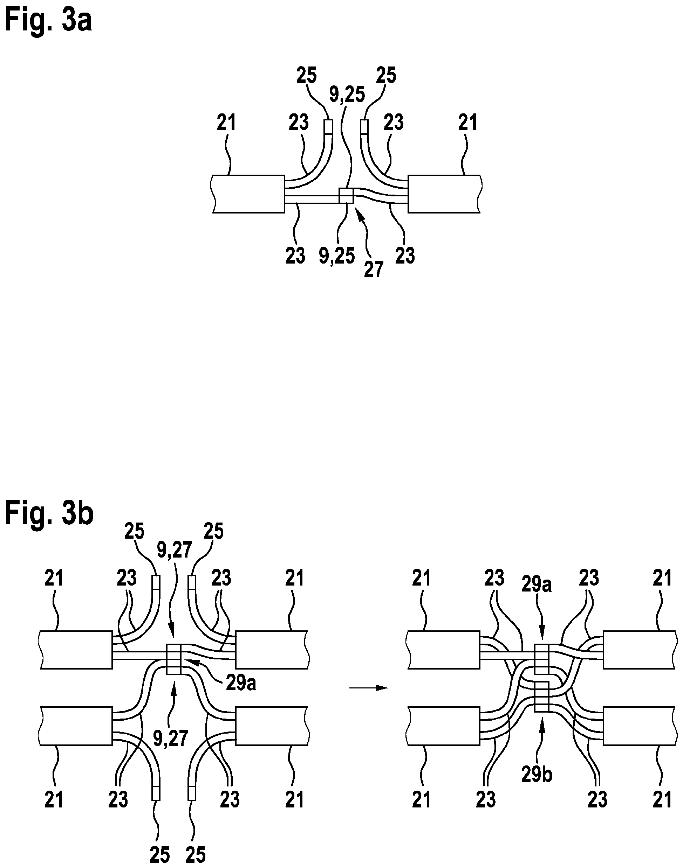

Ein alternatives Schweißverfahren zum Herstellen einer X-Verbindung ist in Fig. 3a und Fig. 3b gezeigt.

Dabei werden in einem ersten Vorverdichtungsschritt zwei Litzenabschnitte 25 einer ersten der Leitungen 21 miteinander verbunden und in einem zweiten Vorverdichtungsschritt zwei Litzenabschnitte 25 einer zweiten der Leitungen 21 miteinander verbunden. In jedem Vorverdichtungsschritt werden die jeweiligen Litzenabschnitte 25 als Fügepartner 9 so positioniert, dass sie von unterschiedlichen, insbesondere einander gegenüberliegenden Seiten in den Zwischenraum 11 hineinragen und der resultierende Ausgangsknoten 27 ein sogenannter Durchgangsknoten ist (siehe Fig. 3a).

Anschließend werden die beiden Ausgangsknoten 27 als Fügepartner 9 in einem ersten Fertigschweißschritt zu einem ersten Gesamtknoten 29a verschweißt.

Die übrigen vier Litzenabschnitte 25 können dann als Fügepartner 9 in einem zweiten Fertigschweißschritt, d. h. ohne Vorverdichtung, zu einem zweiten Gesamtknoten 29b verschweißt werden (siehe Fig. 3b).

Zusätzlich oder alternativ kann die Ultraschallschweißmaschine 1 eingesetzt werden, um mindestens drei Leitungen 21, die je zwei Litzen 23 umfassen, miteinander zu einer sogenannten Y-Verbindung zu verschweißen.

Dabei können beispielsweise insgesamt zwei Vorverdichtungsschritte durchgeführt werden, wobei in jedem Vorverdichtungsschritt zwei der Litzenabschnitte 25 als Fügepartner 9 zu einem Ausgangsknoten 27 verschweißt werden. Die Ausgangsknoten 27 können als Endknoten ausgebildet werden, beispielsweise so, wie es in Fig. 2a veranschaulicht ist. Alternativ kann jeder Ausgangsknoten 27 als Durchgangsknoten ausgebildet werden.

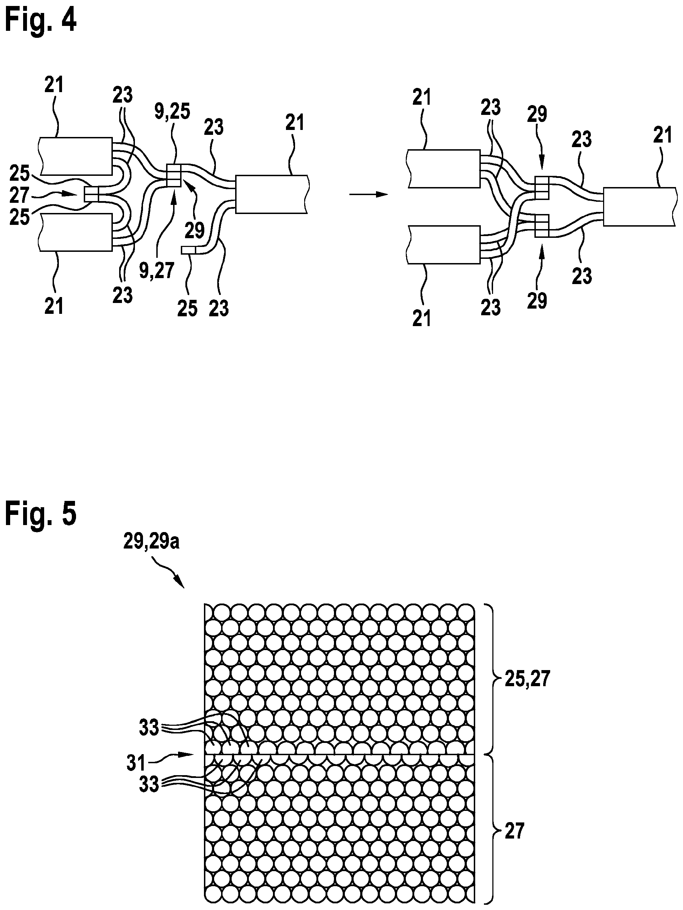

Anschließend werden jeweils einer der Ausgangsknoten 27 und einer der zwei übrigen Litzenabschnitte 25 als Fügepartner 9 in einem Fertigschweißschritt zu einem Gesamtknoten 29 verschweißt (siehe Fig. 4). Bei zwei Ausgangsknoten 27 werden also in zwei Fertigschweißschritten insgesamt zwei Gesamtknoten 29 geschweißt.

Die Y-Verbindung kann auch aus vier oder mehr als vier Leitungen 21 gebildet werden. In diesem Fall ist es möglich, dass in einem Vorverdichtungsschritt gleichzeitig drei oder mehr als drei Litzenabschnitte 25 von einer Seite in den Zwischenraum 11 einlegt werden, um einen der Ausgangsknoten 27 zu bilden.

Die Vorverdichtungsschritte können sich von den Fertigschweißschritten insofern unterscheiden, als mindestens einer der folgenden Ultraschallschweißparameter in den Vorverdichtungsschritten kleiner als in den Fertigschweißschritten gewählt wird: eine Ultraschallamplitude; eine Schweißleistung; eine Schweißenergie; eine Schweißzeit; eine Anpressfläche; eine Schweißbreite; ein Druck, mit dem die jeweiligen Fügepartner 9 zusammengedrückt werden.

In jedem der Vorverdichtungs- und Fertigschweißschritte können die jeweils nicht zu verschweißenden Abschnitte 19 der Leitungen 25, also beispielsweise andere Litzenabschnitte, andere Ausgangsknoten und/oder andere Gesamtknoten, mittels der Rückhaltevorrichtung 17 vom Zwischenraum 11 ferngehalten werden.

Die Leitungen 21 können jeweils auch mehr als zwei Litzen 23 umfassen, die in einem oder mehreren der vorstehend beschriebenen Verfahren verschweißt werden können. Ferner können unterschiedliche Leitungen 21 unterschiedlich viele Litzen 23 umfassen.

Als Leitungen 21 können beispielsweise geschirmte oder ungeschirmte Leitungen aus Kupferlitzen mit einem Querschnitt von jeweils 6 mm² verwendet werden. Die Litzen 23 können zumindest teilweise isoliert sein. Die jeweiligen Querschnitte der Litzen 23 können auch voneinander abweichen. Möglich sind aber auch andere Typen von Leitungen 21.

Wie in Fig. 2a bis Fig. 4 gezeigt, können die Ausgangsknoten 27 jeweils aus Litzenabschnitten 25, die von unterschiedlichen Leitungen 21 stammen, gebildet werden. Möglich ist aber auch, dass mindestens einer der oder jeder Ausgangsknoten 27, zusätzlich oder alternativ, aus mindestens zwei Litzenabschnitten 25 der gleichen Leitung 21 gebildet wird.

Fig. 5 zeigt schematisch einen Querschnitt durch einen der Gesamtknoten 29, 29a, wie er beispielsweise in einem Schliffbild unter dem Mikroskop erkennbar ist. Ein Übergangsbereich zwischen den beiden miteinander verschweißten Ausgangsknoten 27 (Fig. 2b, Fig. 3b) bzw. zwischen dem Ausgangsknoten 27 und dem damit verschweißten Litzenabschnitt 25 (Fig. 4) ist in Form einer charakteristischen Linie 31 erkennbar, die sich hier horizontal über eine gesamte Breite des Gesamtknotens 29, 29a erstreckt. Die Linie 31 ergibt sich durch eine Aneinanderreihung abgeflachter Abschnitte einzelner Adern 33 der Litzen, aus denen die Verbindung geschweißt wurde, und ist charakteristisch für Verbindungen, die in einem der vorstehend beschriebenen Verfahren geschweißt wurden. In Versuchen konnte gezeigt werden, dass Querschnitte von X- oder Y-Verbindungen, die in herkömmlichen einstufigen Verfahren mittels Ultraschall geschweißt wurden, keine derartige Trennlinie aufweisen.

Im Folgenden werden verschiedene Varianten der Verfahren nochmals mit anderen Worten beschrieben.

Die vorgenannten Vorverdichtungs- und Fertigschweißschritte können an ein und derselben Ultraschallschweißmaschine (nachstehend kurz Maschine genannt) ausgeführt werden. Das Schweißen einer X-Verbindung aus vier Leitungen 21 mit je zwei Litzen 23 kann dann beispielsweise folgendermaßen ablaufen.
a) Vorverdichten der ersten beiden Litzen 23 der ersten beiden Leitungen 21. Dabei wird jede Leitung 21 so in die Maschine eingelegt, sodass die jeweilige Litze 23 mit ihrer Ummantelung gegen einen Isolationsanschlag stößt. Darauf wird die Leitung 21 an der Maschine festgeklemmt und die Litze 23 im Schweißraum positioniert. Die beiden Leitungen 21 können jeweils entweder von der gleichen Seite oder von unterschiedlichen, insbesondere einander gegenüberliegenden Seiten in die Maschine eingelegt werden. Die beiden nicht zu verschweißenden Litzen 23 werden in geeigneter Weise vom Schweißraum ferngehalten, beispielsweise durch Biegen (z. B. um 90°) und Anordnen außerhalb eines Schallschutzgehäuses oder Ablegen in der Rückhaltevorrichtung 17. Anschließend werden die beiden eingelegten Litzen 23 verschweißt, genauer gesagt vorverdichtet, um einen Ausgangsknoten 27 zu erhalten.
b) Vorverdichten der zwei übrigen Litzen 23 der ersten beiden Leitungen 21 zu einem Ausgangsknoten 27 analog zu Schritt a). Dabei wird der Ausgangsknoten 27 aus Schritt a) mithilfe der Rückhaltevorrichtung 17 außerhalb des Schweißraums positioniert.
c) Vorverdichten der ersten beiden Litzen 23 der zwei übrigen Leitungen 21 zu einem Ausgangsknoten 27 analog zu Schritt a).
d) Vorverdichten der zwei übrigen Litzen 23 der zwei übrigen Leitungen 21 zu einem Ausgangsknoten 27 analog zu Schritt a).
e) Verschweißen der ersten beiden Ausgangsknoten 27, die beispielsweise nur Minuspol-Litzen miteinander verbinden. Dabei wird einer der Ausgangsknoten 27 von der einen Seite und der andere Ausgangsknoten 27 von der anderen, beispielsweise gegenüberliegenden Seite im Schweißraum positioniert. Die zwei übrigen Ausgangsknoten 27 werden in geeigneter Weise vom Schweißraum ferngehalten (siehe Schritt a)). Anschließend werden die beiden Ausgangsknoten 27 miteinander verschweißt, um einen Gesamtknoten 29 zu erhalten.
f) Verschweißen der zwei übrigen Ausgangsknoten 27, die beispielsweise nur Pluspol-Litzen miteinander verbinden, zu einem Gesamtknoten 29 analog zu Schritt e). Da hier das Anordnen des Gesamtknotens 29 aus Schritt e) außerhalb des Schallschutzgehäuses aus Platzgründen in der Regel nicht möglich ist, kann der Gesamtknoten 29 in diesem Fall innerhalb des Schallschutzgehäuses, z. B. mittels der Rückhaltevorrichtung 17, fixiert werden, sodass er beim Schweißen des anderen Gesamtknotens nicht im Weg ist.

Alternativ können die Vorverdichtungs- und Fertigschweißschritte auf verschiedenen Maschinen ausgeführt werden.

Beispielsweise können die Vorverdichtungsschritte a) bis d) an einer gängigen Serienmaschine ausgeführt werden. Theoretisch können auch die Fertigschweißschritte e) und f) an einer Serienmaschine ausgeführt werden. Allerdings sind an einer solchen Maschine in der Regel keine Hilfsmittel wie Isolationsanschläge oder Leitungsklemmen vorhanden.

Der Fertigschweißschritt f) sollte an einer speziellen Maschine mit einer geeigneten Rückhaltevorrichtung 17 ausgeführt werden, da der Gesamtknoten 29 aus Schritt e) aus Platzgründen in der Regel innerhalb des Schweißraums positioniert werden muss (Serienmaschinen weisen in der Regel keine derartige Rückhaltevorrichtung auf).

Theoretisch kann der Fertigschweißschritt f) auch an einer entsprechend nachgerüsteten Serienmaschine ausgeführt werden.

Alternativ können die zwei Gesamtknoten auf unterschiedliche Weise geschweißt werden, wie nachstehend beispielhaft erläutert.
a) Vorverdichten der ersten beiden Litzen 23 der ersten beiden Leitungen 21. Dabei wird eine der Litzen 23 von der einen Seite und die andere Litze 23 von der gegenüberliegenden Seite in den Schweißraum eingelegt, d. h., die beiden Litzen 23 werden in einer Linie ("inline") zueinander ausgerichtet. Die übrigen zwei Litzen 23 werden in geeigneter Weise vom Schweißraum ferngehalten werden (siehe oben). Anschließend werden die beiden eingelegten Litzen 23 miteinander verschweißt, genauer gesagt vorverdichtet, um einen Ausgangsknoten 27 zu erhalten.
b) Vorverdichten der ersten beiden Litzen 23 der zwei übrigen Leitungen 21 zu einem Ausgangsknoten 27 analog zu Schritt a).
c) Verschweißen der beiden Ausgangsknoten 27 zu einem ersten Gesamtknoten 29a.
d) Vorverdichten der zwei übrigen Litzen 23 der ersten beiden Leitungen 21 zu einem Ausgangsknoten 27 analog zu Schritt a). Dabei kann der erste Gesamtknoten 29a innerhalb des Schallschutzgehäuses in der Rückhaltevorrichtung 17 untergebracht werden.
d) Vorverdichten der zwei übrigen Litzen 23 der zwei übrigen Leitungen 21 zu einem Ausgangsknoten 27 analog zu Schritt a).
e) Verschweißen der beiden übrigen Ausgangsknoten 27 zu einem zweiten Gesamtknoten 29b analog zu Schritt c).

Wie weiter oben beschrieben, kann der zweite Gesamtknoten 29b auch ohne Vorverdichtung geschweißt werden (siehe Fig. 3b).

Es ist möglich, dass auf mindestens einer Seite auch mehr als zwei Leitungen 21 miteinander verschweißt werden.

Zumindest in den Vorverdichtungsschritten kann zusätzlich eine spezielle Einlegehilfe verwendet werden, die ausgebildet ist, um symmetrische Knotenaufbauten, auch *side-splices* genannt, zu verhindern.

Abschließend wird darauf hingewiesen, dass Begriffe wie "aufweisend", "umfassend", "mit" usw. keine anderen Elemente oder Schritte ausschließen und unbestimmte Artikel wie "ein" oder "eine" keine Vielzahl ausschließen. Ferner wird darauf hingewiesen, dass Merkmale oder Schritte, die mit Verweis auf eine der vorstehenden Ausführungsformen beschrieben werden, auch in Kombination mit Merkmalen oder Schritten, die mit Verweis auf andere der vorstehenden Ausführungsformen beschrieben werden, verwendet werden können. Bezugszeichen in den Ansprüchen sind nicht als Einschränkung anzusehen.

### Liste der Bezugszeichen

- 1: Ultraschallschweißmaschine
- 3: Sonotrode
- 5: Amboss
- 9: Fügepartner
- 11: Zwischenraum
- 13: Seitenschieber
- 15: Tuschierplatte
- 17: Rückhaltevorrichtung
- 19: nicht zu verschweißender Abschnitt
- 21: Leitung
- 23: Litze
- 25: Litzenabschnitt
- 27: Ausgangsknoten
- 29: Gesamtknoten
- 29a: erster Gesamtknoten
- 29b: zweiter Gesamtknoten
- 31: charakteristische Linie
- 33: Ader

## Patentansprüche

1. Verfahren zum Verschweißen von mindestens drei Leitungen (21) zu einer Y- oder X-Verbindung, wobei jede Leitung (21) mindestens zwei Litzen (23) mit je einem freiliegenden Litzenabschnitt (25) umfasst und wobei jede Litze an ihrer Außenseite zumindest abschnittweise mit einem elektrischen isolierenden Material in einer oder mehreren Schichten ummantelt ist, wobei das Verfahren umfasst:
einen ersten Ultraschallschweißschritt, in dem mindestens zwei Ausgangsknoten (27) gebildet werden, wobei jeder Ausgangsknoten (27) durch Verschweißen von mindestens zwei der Litzenabschnitte (25) mittels Ultraschall gebildet wird;
einen dem ersten Ultraschallschweißschritt folgenden zweiten Ultraschallschweißschritt, in dem mindestens zwei Gesamtknoten (29, 29a, 29b) gebildet werden, wobei mindestens einer der Gesamtknoten (29, 29a, 29b) durch Verschweißen von mindestens einem der Ausgangsknoten (27) mit mindestens einem der übrigen Litzenabschnitte (25), die noch nicht in einem Ausgangsknoten (27) verschweißt wurden, und/oder mit mindestens einem anderen der Ausgangsknoten (27) mittels Ultraschall gebildet wird.

2. Verfahren nach Anspruch 1,
wobei zum Verschweißen von mindestens drei Leitungen (21) zu einer Y-Verbindung im zweiten Ultraschallschweißschritt jeder Gesamtknoten (29, 29a, 29b) durch Verschweißen von mindestens einem der Ausgangsknoten (27) mit mindestens einem der übrigen Litzenabschnitte (25) mittels Ultraschall gebildet wird.

3. Verfahren nach Anspruch 1,
wobei zum Verschweißen von mindestens vier Leitungen (21) zu einer X-Verbindung im zweiten Ultraschallschweißschritt jeder Gesamtknoten (29, 29a, 29b) durch Verschweißen von mindestens zwei der Ausgangsknoten (27) mittels Ultraschall gebildet wird.

4. Verfahren nach Anspruch 1,
wobei zum Verschweißen von mindestens vier Leitungen (21) zu einer X-Verbindung im zweiten Ultraschallschweißschritt ein erster Gesamtknoten (29a) und ein zweiter Gesamtknoten (29b) gebildet werden, wobei der erste Gesamtknoten (29a) durch Verschweißen der mindestens zwei Ausgangsknoten (27) mittels Ultraschall gebildet wird, wobei der zweite Gesamtknoten (29b) durch Verschweißen der übrigen Litzenabschnitte (25) mittels Ultraschall gebildet wird.

5. Verfahren nach einem der vorhergehenden Ansprüche,
wobei das Verschweißen mittels Ultraschall umfasst: Positionieren der jeweiligen Fügepartner (9) in einem Zwischenraum (11) zwischen einer Sonotrode (3) und einem Amboss (5); Zusammendrücken der im Zwischenraum (11) positionierten Fügepartner (9); Versetzen der Sonotrode (3) in Ultraschallschwingungen.

6. Verfahren nach Anspruch 5,
wobei die mindestens zwei Litzenabschnitte (25) beim Bilden von mindestens einem der Ausgangsknoten (27) so positioniert werden, dass sie von der gleichen Seite in den Zwischenraum (11) hineinragen; und/oder
wobei die mindestens zwei Litzenabschnitte (25) beim Bilden von mindestens einem der Ausgangsknoten (27) so positioniert werden, dass sie von unterschiedlichen, insbesondere einander gegenüberliegenden Seiten in den Zwischenraum (11) hineinragen.

7. Verfahren nach Anspruch 5 oder 6,
wobei mindestens zwei der jeweiligen Fügepartner (9) beim Bilden von mindestens einem der Gesamtknoten (29, 29a, 29b) so positioniert werden, dass sie von der gleichen Seite in den Zwischenraum (11) hineinragen; und/oder
wobei mindestens zwei der jeweiligen Fügepartner (9) beim Bilden von mindestens einem der Gesamtknoten (29, 29a, 29b) so positioniert werden, dass sie von unterschiedlichen, insbesondere einander gegenüberliegenden Seiten in den Zwischenraum (11) hineinragen.

8. Verfahren nach einem der Ansprüche 5 bis 7,
wobei nicht zu verschweißende Abschnitte (19) der Leitungen (21) mittels einer Rückhaltevorrichtung (17) außerhalb des Zwischenraums (11) gehalten werden.

9. Verfahren nach Anspruch 8,
wobei die nicht zu verschweißenden Abschnitte (19) mindestens einen der folgenden Abschnitte der Leitungen (21) umfassen: einen der Ausgangsknoten (27), einen der Gesamtknoten (29, 29a, 29b), einen der Litzenabschnitte (25).

10. Verfahren nach einem der vorhergehenden Ansprüche,
wobei beim Bilden der Ausgangsknoten (27) andere Ultraschallschweißparameter als beim Bilden der Gesamtknoten (29, 29a, 29b) verwendet werden.

11. Verfahren nach Anspruch 10,
wobei mindestens einer der folgenden Ultraschallschweißparameter beim Bilden der Ausgangsknoten (27) kleiner als beim Bilden der Gesamtknoten (29, 29a, 29b) gewählt wird: eine Ultraschallamplitude; eine Schweißleistung; eine Schweißenergie; eine Schweißzeit; eine Anpressfläche; eine Schweißbreite; ein Druck, mit dem die jeweiligen Fügepartner (9) zusammengedrückt werden.

12. Verfahren nach einem der vorhergehenden Ansprüche,
wobei die Ausgangsknoten (27) auf einer anderen Ultraschallschweißmaschine (1) als die Gesamtknoten (29, 29a, 29b) gebildet werden.

13. Verfahren nach einem der vorhergehenden Ansprüche,
wobei mindestens einer der Ausgangsknoten (27) aus Litzenabschnitten (25) von mindestens zwei der Leitungen (21) gebildet wird; und/oder
wobei mindestens einer der Ausgangsknoten (27) aus Litzenabschnitten (25) der gleichen Leitung (21) gebildet wird.

14. Verfahren nach einem der vorhergehenden Ansprüche,
wobei jeder Ausgangsknoten (27) aus anderen Litzenabschnitten (25) als jeder übrige Ausgangsknoten (27) gebildet wird; und/oder
wobei jeder Gesamtknoten (29, 29a, 29b) aus anderen Fügepartnern als jeder übrige Gesamtknoten (29, 29a, 29b) gebildet wird.

15. Verfahren nach einem der vorhergehenden Ansprüche,
wobei mindestens einer der Litzenabschnitte (25) in einem dem ersten und/oder zweiten Ultraschallschweißschritt vorhergehenden Ultraschallverdichtungsschritt mittels Ultraschall verdichtet wurde.

## Claims

1. Method for welding at least three lines (21) to form a Y or X splice, each line (21) comprising at least two stranded wires (23), each having an exposed stranded wire portion (25) and each stranded wire being sheathed at its outside at least partially with an electrically isolating material composed of one or more layers, wherein the method comprises:
a first ultrasonic welding step in which at least two initial nodes (27) are formed, each initial node (27) being formed by welding at least two of the stranded wire portions (25) using ultrasound;
a second ultrasonic welding step following the first ultrasonic welding step, in which at least two overall nodes (29, 29a, 29b) are formed, at least one of the overall nodes (29, 29a, 29b) being formed by welding at least one of the initial nodes (27) to at least one of the remaining stranded wire portions (25) which have not yet been welded in an initial node (27) and/or to at least one other of the initial nodes (27) using ultrasound.

2. Method according to claim 1,
wherein, in order to weld at least three lines (21) to form a Y splice in the second ultrasonic welding step, each overall node (29, 29a, 29b) is formed by welding at least one of the initial nodes (27) to at least one of the remaining stranded wire portions (25) using ultrasound.

3. Method according to claim 1,
wherein, in order to weld at least four lines (21) to form an X splice in the second ultrasonic welding step, each overall node (29, 29a, 29b) is formed by welding at least two of the initial nodes (27) using ultrasound.

4. Method according to claim 1,
wherein, in order to weld at least four lines (21) to form an X splice in the second ultrasonic welding step, a first overall node (29a) and a second overall node (29b) are formed, the first overall node (29a) being formed by welding the at least two initial nodes (27) using ultrasound, the second overall node (29b) being formed by welding the remaining stranded wire portions (25) using ultrasound.

5. Method according to any of the preceding claims,
wherein welding using ultrasound comprises: positioning the respective joining partners (9) in an intermediate space (11) between a sonotrode (3) and an anvil (5); pressing together the joining partners (9) positioned in the intermediate space (11); setting the sonotrode (3) into ultrasonic vibration.

6. Method according to claim 5,
wherein, when forming at least one of the initial nodes (27), the at least two stranded wire portions (25) are positioned such that they project into the intermediate space (11) from the same side; and/or
wherein, when forming at least one of the initial nodes (27), the at least two stranded wire portions (25) are positioned such that they project into the intermediate space (11) from different, in particular opposite, sides.

7. Method according to claim 5 or 6,
wherein, when forming at least one of the overall nodes (29, 29a, 29b), at least two of the respective joining partners (9) are positioned such that they project into the intermediate space (11) from the same side; and/or
wherein, when forming at least one of the overall nodes (29, 29a, 29b), at least two of the respective joining partners (9) are positioned such that they project into the intermediate space (11) from different, in particular opposite, sides.

8. Method according to any of claims 5 to 7,
wherein portions (19), that are not to be welded, of the lines (21) are held outside the intermediate space (11) by means of a retaining device (17).

9. Method according to claim 8,
wherein the portions (19) not to be welded comprise at least one of the following portions of the lines (21): one of the initial nodes (27), one of the overall nodes (29, 29a, 29b), one of the stranded wire portions (25).

10. Method according to any of the preceding claims,
wherein, when forming the initial nodes (27), different ultrasonic welding parameters are used than when forming the overall nodes (29, 29a, 29b).

11. Method according to claim 10,
wherein, when forming the initial nodes (27), at least one of the following ultrasonic welding parameters is chosen to be smaller than when forming the overall nodes (29, 29a, 29b): an ultrasonic amplitude; a welding power; a welding energy; a welding time; a contact surface; a welding width; a pressure with which the respective joining partners (9) are pressed together.

12. Method according to any of the preceding claims,
wherein the initial nodes (27) are formed on a different ultrasonic welding machine (1) than the overall nodes (29, 29a, 29b).

13. Method according to any of the preceding claims,
wherein at least one of the initial nodes (27) is formed from stranded wire portions (25) of at least two of the lines (21); and/or
wherein at least one of the initial nodes (27) is formed from stranded wire portions (25) of the same line (21).

14. Method according to any of the preceding claims,
wherein each initial node (27) is formed from different stranded wire portions (25) than any other initial node (27); and/or
wherein each overall node (29, 29a, 29b) is formed from different joining partners than any other overall node (29, 29a, 29b).

15. Method according to any of the preceding claims,
wherein at least one of the stranded wire portions (25) has been compacted using ultrasound in an ultrasonic compaction step preceding the first and/or second

## Revendications

1. Procédé de soudage d'au moins trois lignes (21) pour former une connexion en Y ou en X, chaque ligne (21) comprenant au moins deux torons (23) chacun avec une section de torons (25) exposée et chaque toron étant enveloppé sur sa face extérieure au moins par sections avec un matériau électriquement isolant en une ou plusieurs couches, le procédé comprenant :
une première étape de soudage par ultrasons, dans laquelle au moins deux noeuds initiaux (27) sont formés, chaque noeud initial (27) étant formé par soudage d'au moins deux des sections de torons (25) au moyen d'ultrasons ;
une deuxième étape de soudage par ultrasons suivant la première étape de soudage par ultrasons, dans laquelle au moins deux noeuds globaux (29, 29a, 29b) sont formés, au moins l'un des noeuds globaux (29, 29a, 29b) étant formé par soudage d'au moins l'un des noeuds initiaux (27) avec au moins l'une des sections de torons (25) restantes qui n'ont pas encore été soudées dans un noeud initial (27) et/ou avec au moins un autre des noeuds initiaux (27) au moyen d'ultrasons.

2. Procédé selon la revendication 1,
dans lequel, pour le soudage d'au moins trois lignes (21) pour former une connexion en Y dans la deuxième étape de soudage par ultrasons, chaque noeud global (29, 29a, 29b) est formé par soudage d'au moins l'un des noeuds initiaux (27) avec au moins l'une des sections de torons (25) restantes au moyen d'ultrasons.

3. Procédé selon la revendication 1,
dans lequel, pour le soudage d'au moins quatre lignes (21) pour former une connexion en X dans la deuxième étape de soudage par ultrasons, chaque noeud global (29, 29a, 29b) est formé par soudage d'au moins deux des noeuds initiaux (27) au moyen d'ultrasons.

4. Procédé selon la revendication 1,
dans lequel, pour le soudage d'au moins quatre lignes (21) pour former une connexion en X dans la deuxième étape de soudage par ultrasons, un premier noeud global (29a) et un deuxième noeud global (29b) sont formés, le premier noeud global (29a) étant formé par soudage des au moins deux noeuds initiaux (27) au moyen d'ultrasons, le deuxième noeud global (29b) étant formé par soudage des sections de torons (25) restantes au moyen d'ultrasons.

5. Procédé selon l'une quelconque des revendications précédentes,
dans lequel le soudage au moyen d'ultrasons comprend : le positionnement des partenaires d'assemblage (9) respectifs dans un espace intermédiaire (11) entre une sonotrode (3) et une enclume (5) ; la compression des partenaires d'assemblage (9) positionnés dans l'espace intermédiaire (11) ; la mise en vibrations ultrasonores de la sonotrode (3).

6. Procédé selon la revendication 5,
dans lequel les au moins deux sections de torons (25) sont positionnées lors de la formation d'au moins l'un des noeuds initiaux (27) de telle sorte qu'elles font saillie du même côté dans l'espace intermédiaire (11) ; et/ou
dans lequel les au moins deux sections de torons (25) sont positionnées lors de la formation d'au moins l'un des noeuds initiaux (27) de telle sorte qu'elles font saillie de différents côtés, en particulier opposés l'un à l'autre, dans l'espace intermédiaire (11).

7. Procédé selon la revendication 5 ou 6,
dans lequel au moins deux des partenaires d'assemblage (9) respectifs sont positionnés lors de la formation d'au moins l'un des noeuds globaux (29, 29a, 29b) de telle sorte qu'elles font saillie du même côté dans l'espace intermédiaire (11) ; et/ou
dans lequel au moins deux des partenaires d'assemblage (9) respectifs sont positionnés lors de la formation d'au moins l'un des noeuds globaux (29, 29a, 29b) de telle sorte qu'elles font saillie de différents côtés, en particulier opposés l'un à l'autre, dans l'espace intermédiaire (11).

8. Procédé selon l'une quelconque des revendications 5 à 7,
dans lequel des sections (19) à ne pas souder des lignes (21) sont maintenues à l'extérieur de l'espace intermédiaire (11) au moyen d'un dispositif de retenue (17).

9. Procédé selon la revendication 8,
dans lequel les sections (19) à ne pas souder comprennent au moins l'une des sections suivantes des lignes (21) : l'un des noeuds initiaux (27), l'un des noeuds globaux (29, 29a, 29b), l'une des sections de torons (25).

10. Procédé selon l'une quelconque des revendications précédentes,
dans lequel d'autres paramètres de soudage par ultrasons sont utilisés lors de la formation des noeuds initiaux (27) que lors de la formation des noeuds globaux (29, 29a, 29b).

11. Procédé selon la revendication 10,
dans lequel au moins l'un des paramètres de soudage par ultrasons suivants est choisi plus petit lors de la formation des noeuds initiaux (27) que lors de la formation des noeuds globaux (29, 29a, 29b) : une amplitude ultrasonore ; une puissance de soudage ; une énergie de soudage ; un temps de soudage ; une surface de pressage ; une largeur de soudage ; une pression avec laquelle les partenaires d'assemblage (9) respectifs sont comprimés.

12. Procédé selon l'une quelconque des revendications précédentes,
dans lequel les noeuds initiaux (27) sont formés sur une autre machine de soudage par ultrasons (1) que les noeuds globaux (29, 29a, 29b).

13. Procédé selon l'une quelconque des revendications précédentes,
dans lequel au moins l'un des noeuds initiaux (27) est formé à partir de sections de torons (25) d'au moins deux des lignes (21) ; et/ou
dans lequel au moins l'un des noeuds initiaux (27) est formé à partir de sections de torons (25) de la même ligne (21).

14. Procédé selon l'une quelconque des revendications précédentes,
dans lequel chaque noeud initial (27) est formé à partir de sections de torons (25) autres que chaque noeud initial (27) restant ; et/ou
dans lequel chaque noeud global (29, 29a, 29b) est formé à partir de partenaires d'assemblage autres que chaque noeud global (29, 29a, 29b) restant.

15. Procédé selon l'une quelconque des revendications précédentes,
dans lequel au moins l'une des sections de torons (25) a été comprimée au moyen d'ultrasons dans une étape de compression par ultrasons précédant la première et/ou la deuxième étape de soudage par ultrasons.
